(19) Europäisches Patentamt
European Patent Office
Office européen des brevets

(11) **EP 3 805 933 A1**

(12) **EUROPEAN PATENT APPLICATION**

(43) Date of publication:
**14.04.2021 Bulletin 2021/15**

(51) Int Cl.:
*G06F 11/36* (2006.01)   *G06F 8/77* (2018.01)

(21) Application number: **19201972.7**

(22) Date of filing: **08.10.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Siemens Aktiengesellschaft 80333 München (DE)**

(72) Inventors:
• **Ionescu, Tudor 1090 Wien (AT)**
• **Rothbauer, Stefan 86156 Augsburg (DE)**

(54) **METHOD AND DEVICE FOR MEASURING THE COMPLEXITY OF A COMPUTER PROGRAM**

(57)    The invention relates to a computer-implemented method for measuring the complexity of a computer program under evaluation (22), the method having the steps: providing input data (21); generating output data (23), using the computer program under evaluation (22), by processing the input data (21); training at least one machine learning model (27, 28), using a training set (24) based on a first subset of the input data (21) and based on the output data (23) corresponding to the first subset of the input data (21) and being generated using the computer program under evaluation (22); generating emulated results, using the at least one trained machine learning model (27, 28), by processing at least one further subset of the input data (21); and computing a complexity metric (35) indicating the complexity of the computer program under evaluation (22), based on the emulated results and based on the output data (23) corresponding to the at least one further subset of the input data (21) and being generated using the computer program under evaluation (22).

FIG 1

EP 3 805 933 A1

## Description

The invention relates to a computer-implemented method for measuring the complexity of a computer program under evaluation and a device for measuring the complexity of a computer program under evaluation.

State of the Art

For providing a quantity related to the complexity of a computer program under evaluation, various measures have been proposed. So-called code complexity or program complexity can refer to measures such as lines of code (LOC), the McCabe's cyclomatic complexity metric, the Halstead metric and the Software Engineering Institute (SEI) maintainability index. Herein, the line of code refers to the actual number of lines of code (excluding comments) in the specific implementation given by the program under evaluation. This measure is not completely unambiguous, given that different programming conventions may lead to different numbers of lines of code. McCabe's cyclomatic complexity metric refers to the number of linearly independent paths through a program's source code. The Halstead metric is computed based on the number and types of operators. The SEI maintainability index is given as a polynomial equation composed of predictor variables.

Further, an information-theoretical approach is known from M. Muller, "Stationary Algorithmic capability", arXiv:cd/0608095v5, 2009. Code complexity and understandability is measured using an approximation of the Kolmogorov complexity.

An important application of complexity metrics consists in the assessment of the code evolution. In Lehman et al., "Metrics and Laws of the Evolution - The Nineties View", Proc. 4th International Software Metrics Symposium (METRICS '97). pp. 20-32, laws of software evolution have been proposed. The subsequently extended laws comprise continuing change, increasing complexity, self regulation, conservation of organizational stability, conservation of similarity, continuing growth, declining quality and feedback system properties.

The complexity metrics provide source code-level estimates of the complexity of a given implementation. This can be used to analyze how a program is written and may help to determine which parts of the program are to be improved and in which way the parts of the program are to be improved.

Most source-code level estimates of the complexity are rather unreliable and do not provide much insight apart from a very rough idea about the size and internal structure of the computer program under evaluation. In particular, there is a difference between algorithmic complexity related to the underlying problem to be solved, and the complexity of a given solution. The algorithmic complexity may describe in particular how the execution time increases when the input gets larger. The complexity of a particular solution as measured by the above complexity metrics may be considerably higher for several reasons. For example, maintainability and readability can lead to a higher number of lines of code. Accordingly, the code complexity or complexity of an implementation is not related to the algorithmic complexity.

Accordingly, there is a need to provide reliable measures for determining the code complexity.

It is therefore an object of the present invention to provide a computer-implemented method and a device for measuring the complexity of a computer program under evaluation taking the algorithmic complexity into account.

Summary of the Invention

This object is solved by the subject matter of the independent claims. Advantageous embodiments are set out in the dependent claims.

According to a first aspect, the invention provides a computer-implemented method for measuring the complexity of a computer program under evaluation. Input data is provided. The computer program under evaluation generates output data by processing the provided input data. At least one machine learning model is trained using a training set based on a first subset of the input data and based on the output data corresponding to the first subset of the input data that has been generated using the computer program under evaluation. Emulated results are generated, using the at least one trained machine learning model, by processing at least one further subset of the input data. A complexity metric is computed which indicates the complexity of the computer program under evaluation. The complexity metric is computed based on the emulated results and based on the output data corresponding to the at least one further subset of the input data that has been generated using the computer program under evaluation.

According to a second aspect, the invention provides a device for measuring the complexity of a computer program under evaluation. The device comprises an input interface, a computation unit and an output interface. The input interface receives input data, the computer program under evaluation and at least one machine learning model. The computation unit generates output data, using the computer program under evaluation, by processing the input data. The computation unit further trains at least one machine learning model, using a training set based on a first subset of the input data and based on the output data corresponding to the first subset of the input data and being generated using the computer program under evaluation. The computation unit further generates emulated results, using the at least one trained machine learning model, by processing at least one further subset of the data. The computation unit further computes a complexity metric indicating the complexity of the computer program under evaluation, based on the emulated results and based on the output data corresponding to the at least one further subset of the input data that has been generated using the computer program under evaluation. The output interface outputs the complexity metric computed by the computation unit.

The invention also provides a computer program comprising executable program code configured to, when executed (e.g. by a computing device), perform the computer-implemented method for measuring the complexity of a computer program under evaluation.

The invention also provides a non-transitory computer-readable data storage medium comprising executable program code configured to, when executed (e.g. by a computing device), perform the computer-implemented method for measuring the complexity of a computer program under evaluation.

According to the invention, the complexity metric is computed based on results of machine learning models. The machine learning models can be considered to be test instances which provide a prediction used for determining the complexity of the computer program under evaluation. The complexity metric reflects the intricacy or difficulty to replace a program by a trained machine learning model, i.e., to emulate a program by a machine learning model. The complexity metric can therefore be considered to be an emulation complexity metric.

In analogy with the Turing test, the complexity metric of a computer program under evaluation is 0 if a consumer of the computer program under evaluation cannot tell whether it uses the original program under evaluation or the emulated version of the program under evaluation, i.e. the machine learning model, given the exact same sets of the input. Accordingly, in this case, the accuracy of the emulator is 100%. Accuracy of 100% means that there is a machine learning model that performs perfectly based on the data available to train the machine learning model. The complexity metric depends on the type of the at least one machine learning model and the amount of data needed to train the at least one machine learning model.

The complexity metric reflects the structural complexity of the original program which may be regarded as the problem to be solved. Accordingly, the complexity metric relates to the algorithmic entropy (or Kolmogorov complexity) of a program and goes beyond approaches relating merely to the code complexity.

According to the invention, the term "computer program under evaluation" or "computer program under scrutiny" may refer to a program under consideration for refactoring (i.e. code-level improvements), rewriting (in another programming language), restructuring (in terms of design and/or architecture), or replacement by a trained machine learning model.

According to the invention, the terms "first subset" and "further subset" may refer to subsets smaller than the set of input data. However, the first subset and the at least one further subset may also be identical to the input data, i.e., comprise the entire input data.

According to the invention, the term "output data" may refer to any results obtained by applying the computer program under evaluation to the input data, i.e. by executing the computer program.

According to the invention, the term "machine learning model" may relate to any model known in the art, including artificial neural networks, Bayesian networks, decision trees, support vector machines, genetic algorithms, and the like. In particular, the machine learning models may comprise single-layer convolutional neural networks, multi-level deep convolutional neural networks, random forest models, or any other types of artificial intelligent (AI) models.

According to the invention, the term "training at least one machine learning model" may refer to any learning algorithm known in the art. Supervised learning may be preferred. Other learning algorithms include unsupervised learning, reinforcement learning, feature learning, sparse dictionary learning, anomaly detection, association rules, and the like.

According to the invention, the term "emulated results" or "predicted results" refers to the output of the trained machine learning model, applied to the at least one further subset of the input data. The emulated results are predictions based on the at least one machine learning model which are to be compared with the actual output data generated by the computer program under evaluation.

According to an embodiment of the computer-implemented method for measuring the complexity of a computer program under evaluation, the input data is split into a training set and a validation set.

According to an embodiment of the computer-implemented method for measuring the complexity of a computer program under evaluation, computing the complexity metric comprises the step of computing, for each trained machine learning model, at least one error measure based on the emulated results generated by said trained machine learning model and based on the output data corresponding to the at least one further subset of the input data and being generated using the computer program under evaluation. The at least one error measure may reflect the inadequacy of the trained machine learning model in attempting to produce the same results as the computer program under evaluation. For example, a constant program which produces a constant output regardless of the input, will yield a complexity metric with value 0. For general programs, a normalized complexity metric may take values between 0 and 1.

According to an embodiment of the computer-implemented method for measuring the complexity of a computer program under evaluation, the error measure may comprise a normalized mean squared error, NMSE. The normalized mean squared error is computed based on a difference between the emulated results and the corresponding output data generated using the computer program under evaluation.

Different measures of accuracy, bias and variance inherent to machine learning techniques may also be used as emulation complexity metrics. For example, the out-of-bag error or the confusion matrix nay be used.

According to an embodiment of the computer-implemented method for measuring the complexity of a computer program under evaluation, for a plurality of machine learning models, the complexity metric is computed based on one of the computed error measures or is computed as a function of the computed error measures.

According to an embodiment of the computer-implemented method for measuring the complexity of a computer program under evaluation, for a plurality of machine learning models, the complexity metric may be computed to be the error measure with the smallest value. For example, the complexity metric may be the normalized mean squared error with the smallest value.

According to an embodiment of the computer-implemented method for measuring the complexity of a computer program under evaluation, the complexity metric may be a sum or a weighted sum over the error measures corresponding to different machine learning models. For each machine learning model, a different weight may be determined in advance.

According to an embodiment of the computer-implemented method for measuring the complexity of a computer program under evaluation, at least one further complexity metric is computed for the computer program under evaluation, wherein the computed complexity metric is compared with the computed at least one further complexity metric. The combination of the computed complexity metric (i.e., emulation complexity metric) with the at least one further complexity metrics will provide additional insight which parts of the computer program under evaluation are implemented in accordance with the problems to be solved. Then, different parts of the computer program under evaluation may be ranked or prioritized in view of refactoring or rewriting the computer program under evaluation in a more efficient way (e.g. by using another programming language or another algorithm), or by replacing the computer program under evaluation by a trained machine learning model.

According to an embodiment of the computer-implemented method for measuring the complexity of a computer program under evaluation, the at least one further complexity metric may comprise at least one of lines of code (LOC), the McCabe's cyclomatic complexity metric, the Halstead metric, the Software Engineering Institute (SEI) maintainability index, or any other code complexity metric.

According to an embodiment of the computer-implemented method for measuring the complexity of a computer program under evaluation, the complexity metric and the at least one further complexity metric are computed for a plurality of computer programs under evaluation, and wherein at least one program to be reviewed amongst the plurality of computer programs under evaluation is identified based on the comparisons, for each computer program under evaluation, of the computed complexity metric with the computed at least one further complexity metric. For example, for each of the at least one further complexity metrics, a quotient of the computed complexity metric and said at least one further complexity metric is computed. The quotients may be used to determine whether there exists a more efficient implementation of the computer program under evaluation. For example, if a computer program under evaluation has a large McCabe complexity but a low emulation complexity as described by the computed complexity metric, this may be an indication that there might exist a more efficient implementation for the computer program under evaluation in terms of lines of code or programming language.

According to an embodiment of the computer-implemented method for measuring the complexity of a computer program under evaluation, the provided input data comprises at least one of: randomly generated input data, input data obtained from a database based on previous use cases, model-based input data, and criteria-based input data. The criteria may demand that a larger amount of input data corresponds to regions which are critical. Further, the input data may be spread in a model-based way over the desired input space. Further, the input data may be selected based on interesting edge cases or the most common use cases of the program under evaluation.

According to an embodiment of the computer-implemented method for measuring the complexity of a computer program under evaluation, the first subset of the input data is identical to the at least one further subset of input data. Generally, the same input data may be used to train the at least one machine learning product and to evaluate the complexity metric of the computer program under evaluation. Accordingly, instead of dividing the training data for machine learning into a training set, a test set, and a validation set when training a machine learning model, only the training set may be used. That is, even when test sets and validation sets are used to actually train the machine learning model, the metric may be computed for the training set, only. This may ensure that the at least one machine learning model is used as a statistical "memoizer" rather than for arbitrary inputs.

According to an embodiment of the computer-implemented method for measuring the complexity of a computer program under evaluation, a plurality of machine learning models out of a predefined set of machine learning models is used to compute the complexity metric. The plurality of machine learning models may comprise different types of machine learning models or machine learning models with different architectures. For each machine learning model, a separate complexity metric can be computed. An overall complexity metric may be computed by singling out the complexity metric with the highest or lowest value, or by averaging over the computed complexity metrics.

According to an embodiment of the computer-implemented method for measuring the complexity of a computer program under evaluation, for each subset of the input data of a plurality of further subsets of the input data, a respective complexity metric is computed, based on the emulated results and the output data corresponding to the respective further subset of the input data and being generated using the computer program under evaluation. At least one of the further subsets of the input data is identified, having the highest value of the complexity metric. By this procedure, valuable test cases may be generated, i.e., input sets covering the most difficult conditions for the computer program under evaluation. The input sets leading to the highest relative complexity measure of a computer program under evaluation may reflect a good choice of input sets for further regression tests because they are able to cover the input space more efficiently.

According to an embodiment of the computer-implemented method for measuring the complexity of a computer program under evaluation, the complexity metric is repeatedly computed over time for different evolutionary stages of the computer program under evaluation, wherein the values of the complexity metric at different points in time is used to identify problematic code evolution of the computer program under evaluation. The analysis of the code evolution may be used for determining whether rewriting, refactoring and/or replacing of the computer program under evaluation becomes necessary.

According to an embodiment of the computer-implemented method for measuring the complexity of a computer program under evaluation, the amount of input data and the architecture of the trained machine learning models are taken into consideration to determine the complexity of the original computer program under evaluation based on the complexity metric. For example, multiple complexity metrics may be computed corresponding to different amounts of input data and/or different machine learning models and/or machine learning models with different architectures. The architecture of a neural network, for example, comprises a number of neurons and layers as well as the structure of the network. In case of a random forest, the architecture comprises the number of trees and the depth of the forest.

According to an embodiment of the computer-implemented method for measuring the complexity of a computer program under evaluation, the computed complexity metric is used to determine if a modification of the computer program under evaluation is necessary. Sometimes it is unavoidable that during the lifecycle of a computer program, parts thereof need to be exchanged for different reasons. The reasons may comprise the correction of errors, addressing further requirements, e.g. due to customer desires and changing environmental factors, technology that the computer program is based upon becoming discontinued, e.g. operating systems or web services being replaced by other systems, employees possessing the required expertise (e.g. domain knowledge and understanding of the code) are no longer available, and the like. The computer program under evaluation may at least partially become legacy code, i.e. there may be no or only incomplete tests, and there may be no or only incomplete knowledge about the implementation details by the development team to be entrusted with the change of the computer program under evaluation. This can pose a high risk when it comes to changing parts of the computer program under evaluation, as the effort required cannot be estimated by classical complexity metrics. This risk may translate into high refactoring costs and/or the introduction of new coding faults into the software, the testing and removal of which may entail additional costs over longer periods of time. In this case, the emulation complexity as computed according to the invention, may provide an estimation of the risk implied by modifying the legacy code, e.g. by refactoring or rewriting it, as well as the effort required for the whole computer program under evaluation or the relevant parts.

According to a further embodiment of the computer-implemented method for measuring the complexity of a computer program under evaluation, implementation efficiency, which is reflected by the relation between emulation complexity and the LOC metric, may provide a baseline measure for desirable and undesirable code evolution. An efficient implementation is reflected by comparatively low values both for the emulation complexity and for other complexity metrics. By contrast, a low emulation complexity with high values for other complexity metrics (LOC, McCabe, etc.) may be an indicator for an inefficient implementation. When the implementation efficiency of a codebase decreases over time without being justified by feature additions, developers and architects can timely start planning and preparing for refactoring and/or redesigning problematic code.

According to a further embodiment of the computer-implemented method for measuring the complexity of a computer program under evaluation, the computed complexity metric is used to evaluate implementation efficiency for a given computer program under evaluation. According to the invention, the "implementation efficiency" may be defined as the ratio of the computed complexity metric and a traditional complexity metric, such as lines of code, McCabe complexity and Halstead complexity. Generally, an efficiently implemented program will yield a larger value of the implementation efficiency, provided there exists a basis for comparison. Rationalization of implementation efficiency may be useful when a decision has to be made concerning the benefits and costs of using commercial off-the-shell components instead of developing and maintaining an own code base. When implementation efficiency of a computer program under evaluation (prototype) is high, the use of commercial off-the-shell components may become a viable alternative, considering the certification and maintenance costs the self-developed prototype is likely to generate when refactored or redeveloped for productive use.

According to an embodiment, the device for measuring the complexity of a computer program under

9 EP 3 805 933 A1 10

evaluation further comprises a graphical user interface allowing a user to select at least one of the possible input data sets, the computer program under evaluation, and the at least one machine learning model, and to provide it to the input interface.

According to an embodiment of the device for measuring the complexity of a computer program, the computation unit is adapted to compute the complexity metric comprising the step of computing, for each trained machine learning model, at least one error measure based on the emulated results generated by said trained machine learning model and based on the output data corresponding to the at least one further subset of the input data and being generated using the computer program under evaluation.

Brief description of the drawings

The invention will be explained in greater detail with reference to exemplary embodiments depicted in the drawings as appended.

The accompanying drawings are included to provide a further understanding of the present invention and are incorporated in and constitute a part of this specification. The drawings illustrate embodiments of the present invention and together with the description serve to explain the principles of the invention.

Other embodiments of the present invention and many of the intended advantages of the present invention will be readily appreciated as they become better understood by reference to the following detailed description. Like reference numerals designate corresponding similar parts. It should be understood that method steps are numbered for easier reference but that said numbering does not necessarily imply steps being performed in that order unless explicitly or implicitly described otherwise. In particular, steps may also be performed in a different order than indicated by their numbering. Some steps may be performed simultaneously or in an overlapping manner.

Fig. 1    schematically shows a block diagram illustrating a device for measuring the complexity of a computer program under evaluation according to an embodiment of the invention;

Fig. 2    schematically shows a block diagram showing a training phase for training at least one machine learning model;

Fig. 3    schematically shows a computation phase for computing a complexity metric;

Fig. 4    schematically illustrates a comparison of the emulation complexity metric and conventional complexity metrics for different computer programs under evaluation;

Fig. 5    schematically shows a flowchart illustrating a computer-implemented method for measuring the complexity of the computer program under evaluation;

Fig. 6    schematically illustrates a block diagram illustrating a computer program product according to an embodiment of the invention; and

Fig. 7    schematically illustrates a block diagram illustrating a non-transitory, computer-readable storage medium according to an embodiment of the invention.

Detailed description of the invention

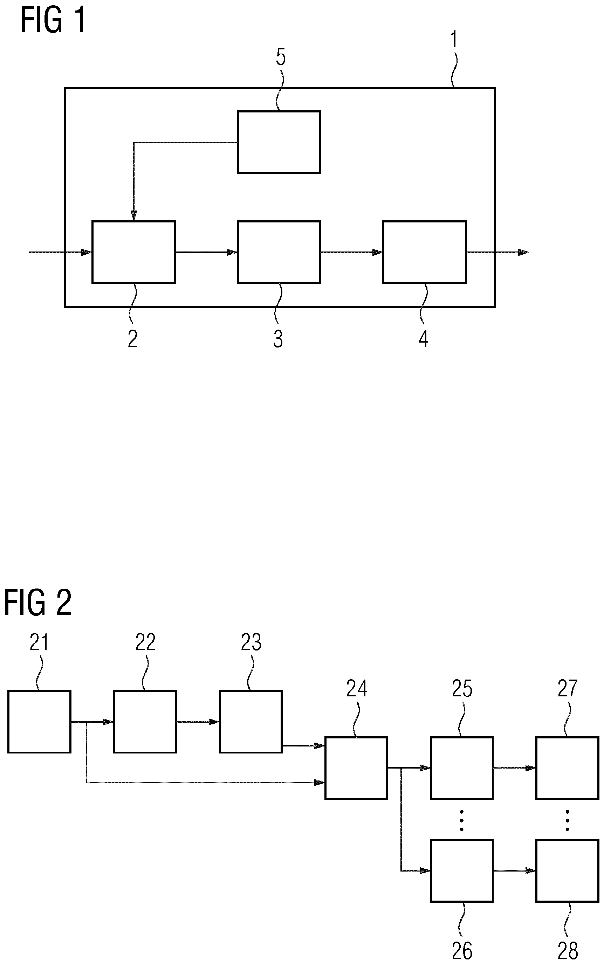

Figure 1 schematically shows a block diagram illustrating a device 1 for measuring the complexity of a computer program under evaluation. The device 1 comprises an input interface 2 for receiving input data, a computer program under evaluation and at least one machine learning model. The input interface 2 may comprise any wired or wireless connection for receiving data from external devices.

The input data may comprise randomly generated input data, input data obtained from a database based on previous use cases, model-based input data and/or criteria-based input data. The input data may comprise a plurality of elements, each element having for example the form of a vector or scalar.

The computer program under evaluation may be any program that takes input data and computes corresponding output data. The computer program under evaluation may itself be a machine learning model.

The at least one machine learning model may comprise a plurality of machine learning models, having different architectures or being of different types. The at least one machine learning model may comprise at least one of artificial neural networks, Bayesian networks, decision trees, support vector machines, genetic algorithms, and the like. In particular, the at least one machine learning model may comprise single-layer convolutional neural networks, multi-level deep convolutional neural networks, random forest models, or any other types of artificial intelligent (AI) models.

According to further embodiments, at least one of the input data, computer program under evaluation and at least one machine learning model may be provided on a memory of the device 1.

Moreover, the device 1 comprises a graphical user interface 5 for interaction with a user. The user may select at least one of the other input data, the computer program under evaluation, and the at least one machine learning model using the graphical user interface 5. The selected elements are provided to the input interface 2.

The device 1 comprises a computation unit 3 which is adapted to receive the provided input data, the computer program under evaluation, and the at least one machine learning model. The computation unit 3 may comprise hardware and software components. The hardware components may comprise at least one of microcontrollers, central processing units, memories and storage devices.

The computation unit 3 generates output data by processing the input data using the computer program under evaluation. Alternatively, or additionally, at least part of the output data may be directly provided to the computation unit 3 via the input interface 2.

The computation unit 3 further trains the at least one machine learning model provided via the input interface 2. The computation unit 3 provides a training set based on a first subset of the input data. The first subset of the input data may also be identical to the input data itself. The input data may be an input vector or scalar which is fed into the machine learning model. The target or label for training the at least one machine learning model comprises the output data generated using the computer program under evaluation, using the first subset of the input data. The output data may be a vector or scalar.

Optionally, the computation unit 3 trains the at least one machine learning model further by using a further subset of the input data which is used as validation data.

The computation unit 3 may train the at least one machine learning model using any learning algorithm, including supervised learning, unsupervised learning, reinforcement learning, feature learning, sparse dictionary learning, anomaly detection, association rules, and the like.

The computation unit 3 further generates emulated results, using the at least one trained machine learning model, by processing at least one further subset of the input data. The at least one further subset of the input data may be identical to the first subset of the input data. The at least one further subset of the input data may also be different from the first subset of the input data.

The computation unit 3 computes a complexity metric which indicates the complexity of the computer program under evaluation. The complexity metric corresponds to an emulation complexity. The complexity metric is computed based on the emulated results and the output data corresponding to the at least one further subset of the input data which has been generated using the computer program under evaluation.

For a given computer program under evaluation p and a given trained machine learning model trained on the basis of the outputs of the computer program under evaluation p for input data comprising a plurality of input cases N, the computation unit 3 may compute the complexity metric EC(p) of the computer program under evaluation p as follows:

$$EC(p) = NMSE(E_p[N] | In[N]).$$

According to this formula, NMSE refers to the normalized mean squared error. $E_p[N]$ refers to the machine learning model, using the N input cases. In[N] denotes the input data.

The normalized mean squared error is defined by the following formula:

$$NMSE = \frac{1}{N} \cdot \sum_i \frac{(P_i - M_i)^2}{\bar{P}\bar{M}}$$

In this formula:

$$\bar{P} = \frac{1}{N} \cdot \sum_i P_i,$$

and

$$\bar{M} = \frac{1}{N} \cdot \sum_i M_i.$$

In the formulas above, M refers to the measured values, i.e. the output data generated using the computer program under evaluation. P refers to the predicted values, i.e. the emulated results generated using the trained machine learning model.

The computation unit 3 may compute for each trained machine learning model at least one error measure based on the emulated results generated by said trained machine learning model and based on the output data corresponding to the at least one further subset of the input data that has been generated using the computer program under evaluation. The complexity metric may be computed based on one of the computed error measures or as a function of the computed error measures. For example, the computation unit 3 may select the error measure having the lowest value.

The computation unit 3 may provide further complexity measures by comparing the computed complexity metric with further complexity metrics, e.g. lines of code, the McCabe's cyclomatic complexity metric, the Halstead metric, the SEI maintainability index, and the like. The further complexity measures may be computed to be the quotient of the computed complexity metric and one of the at least one further complexity metrics.

Further, the computation unit 3 may compute the further complexity measures for a plurality of computer programs under evaluation. At least one computer program under evaluation to be reviewed amongst the computer programs under evaluation may be identified by the computation unit 3 based on the complexity measures. For example, the computer program under evaluation having the smallest quotient of the computed complexity metric and of the at least one further complexity metric can be determined to be a computer program under evaluation to be reviewed. Further measures, such as refactoring, rewriting or exchanging by a machine learning model may be suggested to a user.

Further, the computation unit 3 may be adapted to select a plurality of further subsets of the input data. For each further subset of the input data, a respective complexity metric is computed according to the steps outlined above. Each complexity metric is computed based on the emulated results and the output data corresponding to the respective further subset of the input data. The computation unit 3 compares the complexity metrics corresponding to the further subsets of the input data and identifies one or more of the further subsets of the input data with the highest value of the complexity metric. The further subsets are identified as valuable test cases and may be suggested as choices of input for further regression tests.

The computation unit 3 may further be adapted to compute the complexity metric for different evolutionary stages of the computer program under evaluation. For example, after each update of the computer program under evaluation, the computation unit 3 may compute an updated version of the complexity metric. The time behavior of the complexity metric is used to identify problematic code evolution of the computer program under evaluation. For example, if the complexity metric and/or the change of the complexity metric exceeds predetermined thresholds, the computation unit 3 may provide a warning signal.

The device 1 further comprises an output interface 4 which outputs the complexity metric and/or at least one of the further complexity measures computed by the computation unit 3.

Figure 2 schematically shows a block diagram showing a training phase for training at least one machine learning model. A reference set of input data 21 is provided to a computer program under test 22. The computer program under test 22 generates output data 23. The input data 21 and the output data 23 are used to generate a training set 24 containing the reference output data 23 of the computer program under evaluation in relation to the reference set of input data 21.

The training set 24 is provided to a plurality of machine learning algorithms 25 to 26. Each machine learning algorithm 25 to 26 is used to generate corresponding trained machine learning models 27 to 28.

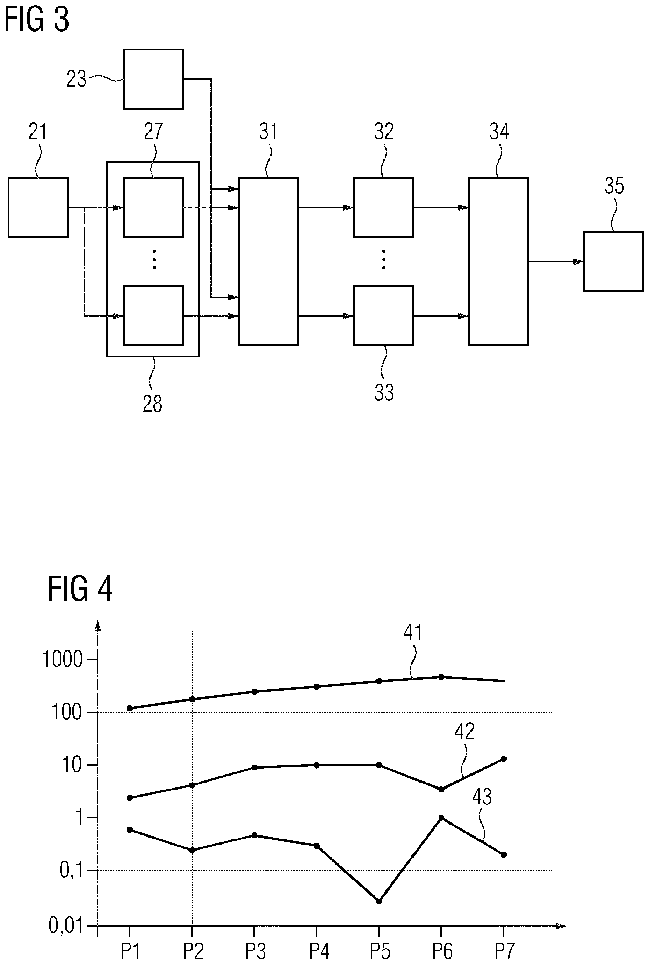

Figure 3 schematically shows a computation phase for computing a complexity metric. The reference set of input data 21 is used for model scoring, e.g. by calling the model's predict function, of the trained machine learning models 27 to 28. Using the trained machine learning models 27 to 28 and the output data 23, the complexity metric 31 is computed as described above. For each trained machine learning model 27 to 28, a corresponding complexity metric can be computed, 32 to 33. The complexity metric with the smallest value is selected, 34. The selected complexity metric is provided as an output, i.e. as the overall complexity metric 35.

Figure 4 schematically illustrates the emulation complexity metric and conventional complexity metrics for different computer programs under evaluation p1 to p7. A metric based on the lines of code 41, a McCabe metric 42 and the emulation complexity metric 43 are illustrated. As can be seen, the fifth computer program under evaluation p5 exhibits a relatively low emulation complexity metric as compared with the other programs while exhibiting comparable values for the McCabe metric 42 and the lines of code metric 41. This suggests that there might be a more efficient implementation of the fifth computer program under evaluation p5. Refactoring, rewriting or emulating, i.e. using a machine learning model, could be taken into consideration.

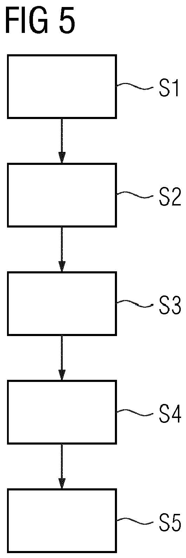

Figure 5 schematically shows a flowchart illustrating a computer-implemented method for measuring the complexity of at least one computer program under evaluation.

In a first method step S1, input data is provided. The input data may be provided in form of a set of vectors and/or scalars. The input data can comprise randomly generated input data, input data obtained from a database based on previous use cases, model-based input data, and/or criteria-based input data.

In a second method step S2, output data is generated by applying the computer program under evaluation to the input data.

In a third method step S3, at least one machine learning model is trained, using a training set based on a first subset of the input data (which may be identical to the entire input data) and based on the output data corresponding to the first subset of the input data being generated using the computer program under evaluation.

In a fourth method step S4, emulated results are generated, using the at least one trained machine learning model, by processing at least one further subset of the input data (which can again be identical to the entire input data).

In a fifth method step S5, a complexity metric is computed, indicating the complexity of the computer program under evaluation, based on the emulated results and based on the output data corresponding to the at least one further subset of the input data being generated using the computer program under evaluation.

The complexity metric may be computed by determining error measures for each trained machine learning model, based on the emulated results generated by the respective trained machine learning model and based on the output data corresponding to the at least one further subset of the input data and being generated using the computer program under evaluation. The complexity metric may be computed by averaging over the (possibly weighted) error measures. Further, one of the error measures, for instance the error measure with the lowest value may be selected as the complexity metric. The error measures may be computed using a normalized mean squared error, as described above.

At least one further complexity metric may be computed for the computer program under evaluation. The computed complexity metric may be compared with the computed at least one further complexity metric.

The complexity metric and the at least one further complexity metric may be computed for a plurality of computer programs under evaluation. At least one program to be reviewed may be identified amongst the plurality of computer programs under evaluation, based on the comparisons, for each computer program under evaluation, of the computed complexity metric with the computed at least one further complexity metric.

For each further subset of the input data, a respective complexity metric may be computed, based on the emulated results and the output data corresponding to the respective further subset of the input data and being generated using the computer program under evaluation. At least one of the further subsets of the input data may be identified, having the highest value of the complexity metric.

Further, the complexity metric may be repeatedly computed over time for different evolutionary stages of the computer program under evaluation. The time behavior of the complexity metric may be used to identify problematic code evolution of the computer program under evaluation.

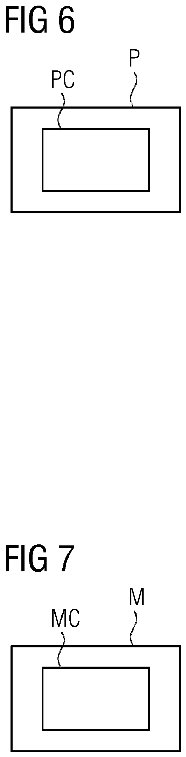

Figure 6 schematically illustrates a block diagram illustrating a computer program product P comprising executable program code PC. The executable program code PC is configured to perform, when executed (e.g. by a computing device), the computer-implemented method for measuring the complexity of a computer program under evaluation.

Figure 7 schematically illustrates a block diagram illustrating a non-transitory, computer-readable storage medium M comprising executable program code MC configured to, when executed (e.g. by a computing device), perform the computer-implemented method for measuring the complexity of a computer program under evaluation.

It should be understood that all advantageous options, variance in modifications described herein and the foregoing with respect to embodiments of the computer-implemented method for measuring the complexity of a computer program under evaluation according to the first aspect may be equally applied to embodiments of the device for measuring the complexity of a computer program under evaluation according to the second aspect, and vice versa.

In the foregoing detailed description, various features are grouped together in one or more examples for the purpose of streamlining the disclosure. It is to be understood that the above description is intended to be illustrative, and not restrictive. It is intended to cover alternatives, modifications and equivalents. Many other examples will be apparent to one skilled in the art upon reviewing the above specification.

**Claims**

1. Computer-implemented method for measuring the complexity of a computer program under evaluation (22), the method having the steps:

   - providing input data (21);
   - generating output data (23), using the computer program under evaluation (22), by processing the input data (21);
   - training at least one machine learning model (27, 28), using a training set (24) based on a first subset of the input data (21) and based on the output data (23) corresponding to the first subset of the input data (21) and being generated using the computer program under evaluation (22);
   - generating emulated results, using the at least one trained machine learning model (27, 28), by processing at least one further subset of the input data (21); and
   - computing a complexity metric (35) indicating the complexity of the computer program under evaluation (22), based on the emulated results and based on the output data (23) corresponding to the at least one further subset of the input data (21) and being generated using the computer program under evaluation (22).

2. The method according to claim 1, wherein computing the complexity metric (35) comprises the step of computing, for each trained machine learning model (27, 28), at least one error measure based on the emulated results generated by said trained machine learning model (27, 28) and based on the output data (23) corresponding to the at least one further subset of the input data (21) and being generated using the computer program under evaluation (22).

3. The method according to claim 2, wherein, for a plurality of machine learning models (27, 28), the complexity metric (35) is computed based on one of the computed error measures or as a function of the computed error measures.

4. The method according to any of the preceding claims, wherein at least one further complexity metric (35) is computed for the computer program under evaluation (22), and wherein the computed complexity metric (35) is compared with the computed at least one further complexity metric (35).

5. The method according to claim 4, wherein the complexity metric (35) and the at least one further complexity metric (35) are computed for a plurality of computer programs under evaluation (22), and wherein at least one program to be reviewed amongst the plurality of computer programs under evaluation (22) is identified based on the comparisons, for each computer program under evaluation (22), of the computed complexity metric (35) with the computed at least one further complexity metric (35).

6. The method according to any of the preceding claims, wherein the provided input data (21) comprises at least one of:

randomly generated input data (21),
input data (21) obtained from a database based on previous use cases,
model-based input data (21), and
criteria-based input data (21).

7. The method according to any of the preceding claims, wherein the first subset of the input data (21) is identical to the at least one further subset of input data (21).

8. The method according to any of the preceding claims, wherein a plurality of machine learning models (27, 28) out of a predefined set of machine learning models (27, 28) is used to compute the complexity metric (35).

9. The method according to any of the preceding claims,
wherein, for a plurality of further subsets of the input data (21), respective complexity metrics (35) are computed, based on the emulated results and the output data (23) corresponding to the respective further subset of the input data (21) and being generated using the computer program under evaluation (22); and
wherein at least one of the further subsets of the input data (21) is identified, having the highest value of the complexity metric (35).

10. The method according to any of the preceding claims, wherein the complexity metric (35) is repeatedly computed over time for different evolutionary stages of the computer program under evaluation (22), and wherein the time behavior of the complexity metric (35) is used to identify problematic code evolution of the computer program under evaluation (22).

11. A device (1) for measuring the complexity of a computer program under evaluation (22), comprising:

an input interface (2) for receiving input data (21), the computer program under evaluation (22), and at least one machine learning model (27, 28);
a computation unit (3), adapted to:

a) generate output data (23), using the computer program under evaluation (22), by processing the input data (21);
b) train the at least one machine learning model (27, 28), using a training set (24) based on a first subset of the input data (21) and based on the output data (23) corresponding to the first subset of the input data (21) and being generated using the computer program under evaluation (22);
c) generate emulated results, using the at least one trained machine learning model (27, 28), by processing at least one further subset of the input data (21); and
d) compute a complexity metric (35) indicating the complexity of the computer program under evaluation (22), based on the emulated results and the output data (23) corresponding to the at least one further subset of the input data (21) and being generated using the computer program under evaluation (22); and

an output interface (4) adapted to output the complexity metric (35) computed by the computation unit (3).

12. The device (1) according to claim 11, further comprising a graphical user interface (5) allowing a user to select at least one of the input data (21), the computer program under evaluation (22), and the at least one machine learning model (27, 28), and to provide it to the input interface (2).

13. The device (1) according to claim 11 or 12, wherein the computation unit (3) is adapted to compute the complexity metric (35) comprising the step of computing, for each trained machine learning model (27, 28), at least one error measure based on the emulated results generated by said trained machine learning model (27, 28) and based on the output data (23) corresponding to the at least one further subset of the input data (21) and being generated using the computer program under evaluation (22).

14. Computer program product (P) comprising executable program code (PC) configured to, when executed by a computing device (1), perform the method according to any of claims 1 to 10.

15. Non-transitory, computer-readable storage medium (M) comprising executable program code (MC) configured to, when executed by a computing device (1), perform the method according to any of claims 1 to 10.

# FIG 1

# FIG 2

## FIG 3

## FIG 4

FIG 5

FIG 6

PC    P

FIG 7

MC    M

Europäisches
Patentamt
European
Patent Office
Office européen
des brevets

# EUROPEAN SEARCH REPORT

Application Number

EP 19 20 1972

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JOHN SHEPPARD ET AL: "Using a competitive learning neural network to evaluate software complexity", SMALL SYSTEMS, ACM, 2 PENN PLAZA, SUITE 701 NEW YORK NY 10121-0701 USA, 31 December 1990 (1990-12-31), pages 262-267, XP058243689, DOI: 10.1145/99412.99487 ISBN: 978-0-89791-347-8 * figure 2 * * figure 3 * * page 263, left-hand column, line 40 - page 263, right-hand column, line 15 * * page 263, right-hand column, line 35 - line 37 * * page 265, left-hand column, line 3 - page 266, left-hand column, line 26 * * page 267 * ----- | 1-15 | INV. G06F11/36 G06F8/77 |

TECHNICAL FIELDS
SEARCHED (IPC)

G06N
G06F

The present search report has been drawn up for all claims

| Place of search | Date of completion of the search | Examiner |
|---|---|---|
| Munich | 11 March 2020 | Maghroum, Walid |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.................................................................
& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **M. MULLER.** *Stationary Algorithmic capability,* 2009

- **LEHMAN et al.** Metrics and Laws of the Evolution - The Nineties View. *Proc. 4th International Software Metrics Symposium (METRICS '97),* 20-32